# EUROPEAN PATENT APPLICATION

(11) **EP 1 331 244 A1**
(43) Date of publication of application: **30.07.2003**
(21) Application number: 01974899.5
(22) Date of filing: 23.10.2001
(51) Int. Cl.: C08L 63/00, C08K 7/16, C08K 3/36, C08K 3/20, C08K 3/26

(54) **EPOXY RESIN COMPOSITION AND ITS USE**

(30) Priority: 24.10.2000 JP 2000323726
(71) Applicant: Mitsui Chemicals, Inc., Tokyo 100-6070 (JP)
(72) Inventor: TOGASHI, Eiki, c/o MITSUI CHEMICALS, INC., Sodegaura-shi, Chiba 299-0265 (JP); SAKURABA, Tsukasa, c/o MITSUI CHEMICALS, INC., Sodegaura-shi, Chiba 299-0265 (JP); OKAMOTO, Kazuhisa, c/o MITSUI CHEMICALS, INC., Sodegaura-shi, Chiba 299-0265 (JP); URAKAWA, Toshiya, c/o MITSUI CHEMICALS, INC., Sodegaura-shi, Chiba 299-0265 (JP)
(74) Representative: Cresswell, Thomas Anthony
(86) International application number: JP0109282
(87) International publication number: WO02034832

(57) **Abstract**

The epoxy resin composition according to the invention contains an epoxy resin and/or an epoxy compound, a curing agent, a curing accelerator and an inorganic filler as main components. The inorganic filler has a particle size of a maximum particle diameter of not more than 10 µm and a mean particle diameter of not more than 3 µm and a slope n of not more than 4.0 in its particle size distribution that is expressed by a Rosin-Rammler's (RRS) diagram, and is contained in the resin composition in an amount of not less than 30 % by weight and not more than 85 % by weight based on the total amount of the resin composition. The slope n is preferably not less than 1.0. The resin composition is preferable for transfer molding or injection molding. This composition is free from deterioration of moldability caused by lowering of flowability and is excellent in mold-transferring properties and excellent dimensional stability. Hence, the composition can provide a precision-molded article having excellent dimensional stability, such as a precision-molded component having a small degree of surface roughness and small circularity. By the use of the resin composition, a precision connector for optical communication, such as a single-core ferrule or a multi-core ferrule, can be produced as resin-made one. Further, the resin composition is excellent in mold-transferring properties and is capable of being injection molded. The precision-molded article according to the invention comprises the resin composition.

## Description

### FIELD OF THE INVENTION

The present invention relates to an epoxy resin composition having excellent mold-transferring properties and excellent dimensional stability, and more particularly to a resin composition for an optical communication connector having a small degree of surface roughness and small circularity (JIS B0182).

The present invention also relates to an epoxy resin composition having excellent mold-transferring properties and capable of being injection molded, and more particularly to a resin composition for precision molding to produce a molded article having a small degree of surface roughness, such as a stamper transferred and plated circuit component or circuit board.

### BACKGROUND OF THE INVENTION

In an epoxy resin composition for semiconductor encapsulation or precision molding, silica having a mean particle diameter of not less than 10 µm and not more than 30 µm is generally contained in an amount of not less than 60 % by weight and not more than 90 % by weight. Such a resin composition is excellent in electrical insulation properties, dimensional stability, adhesion properties and low-pressure moldability, and therefore, it is widely used for encapsulation of electronic components or production of precision-molded components.

In the uses for the precision-molded components, however, it is difficult to always reduce a degree of surface roughness or circularity of the molded article to not more than 1 µm by the particle diameter of a conventional inorganic filler. Moreover, as the particle diameter of the inorganic filler becomes smaller, it becomes more difficult to increase the amount of the filler added to the epoxy resin composition, and the flowability of the composition in the mold becomes worse, so that the moldability of the Composition deteriorates.

By the way, in the epoxy resin composition for semiconductor encapsulation or for precision components, an inorganic filler having a maximum particle diameter of 30 to 100 µm and a mean particle diameter of not less than 3 µm is generally contained in an amount of 20 to 90 % by weight, and such a resin composition is excellent in adhesion strength, mechanical strength and electrical insulation properties. Hence, the composition is widely applied to electric components or electronic components.

Most of the inorganic fillers hitherto used, however, have a mean particle diameter of not less than 5 µm, and the particle diameters of the inorganic fillers are large. Therefore, it is difficult to reduce a degree of surface roughness of the molded article to not more than 1 µm, and precise transfer of a fine pattern of a mold is said to be difficult.

Further, as the particle diameter of the inorganic filler becomes smaller, it becomes more difficult to increase the amount of the filler added to the epoxy resin composition, and the flowability of the composition in the mold becomes worse, so that the moldability of the composition deteriorates, as described above. Furthermore, because of the characteristics of an epoxy resin, the epoxy resin composition lacks heat stability at temperatures in the vicinity of 100°C. Hence, a method to mold the epoxy resin composition is press molding or transfer molding only, and molded articles produced by injection molding are unobtainable, resulting in a problem of low productivity.

### OBJECT OF THE INVENTION

The present invention is intended to solve above problems associated with the related art, and it is an object of the invention to provide an epoxy resin composition which is free from deterioration of moldability caused by lowering of flowability and has excellent mold-transferring properties and excellent dimensional stability, and to enable to produce a precision connector for optical communication such as a single-core ferrule or a multi-core ferrule as resin-made one. It is another object of the invention to provide a precision-molded article obtained by molding the epoxy resin composition, such as a single-core ferrule, a multi-core ferrule or an electronic circuit component.

It is a further object of the invention to provide an epoxy resin composition which is free from deterioration of moldability caused by lowering of flowability, is excellent in mold-transferring properties and is capable of being injection molded, and to enable to apply the composition to an electronic circuit component or circuit board which will have more and more fine patterns in the future, and to enable to transfer a circuit pattern formed on a stamper with precision. By the use of the epoxy resin composition, circuit formation by plating is feasible, and a molded article having a small degree of surface roughness can be produced. Therefore, it is a still further object of the invention to provide a fine electronic circuit component or a fine electronic circuit board having line and space of not more than 10 µm.

### DISCLOSURE OF THE INVENTION

The epoxy resin composition according to the invention is a resin composition containing as main components an epoxy resin and/or an epoxy compound, a curing agent, a curing accelerator and an inorganic filler, wherein:
the inorganic filler has a particle size of a maximum particle diameter of not more than 10 µm and a mean particle diameter of not more than 3 µm and a slope n of not more than 4.0 in its particle size distribution that is expressed by a Rosin-Rammler's (RRS) diagram, and is contained in an amount of not less than 30 % by weight and not more than 85 % by weight based on the total amount of the resin composition.

The slope n in the particle size distribution of the inorganic filler that is expressed by a RRS diagram is preferably not less than 1.0.

The inorganic filler is preferably at least one filler selected from spherical silica, spherical alumina and calcium carbonate. In some use applications, the inorganic filler is particularly preferably spherical silica and/or spherical alumina.

The epoxy resin and/or the epoxy compound are preferably a bi- or more-functional epoxy resin and/or a bi- or more-functional epoxy compound. The epoxy resin is particularly preferably an orthocresol novolak type epoxy resin, a naphthalene skeleton-containing epoxy resin or a biphenyl skeleton-containing epoxy resin.

The curing agent is preferably a phenolic novolak resin or an aralkylphenolic resin.

The epoxy resin composition of the invention is preferably used as an epoxy resin composition for transfer molding.

The epoxy resin composition of the invention is also preferably used as an epoxy resin composition for injection molding. In this case, the curing accelerator is preferably a urea derivative represented by the following formula:

Ar-NH-CO-NR₂

wherein Ar is a substituted or unsubstituted aryl group, and R which may be the same or different are each an alkyl group.

The precision-molded article according to the invention is a molded article obtained from an epoxy resin composition containing as main components an epoxy resin and/or an epoxy compound, a curing agent, a curing accelerator and an inorganic filler, wherein:
the inorganic filler has a particle size of a maximum particle diameter of not more than 10 µm and a mean particle diameter of not more than 3 µm and a slope n of not more than 4.0 in its particle size distribution that is expressed by a Rosin-Rammler's (RRS) diagram, and is contained in the resin composition in an amount of not less than 30 % by weight and not more than 85 % by weight based on the total amount of the resin composition.

The slope n in the particle size distribution of the inorganic filler that is expressed by a RRS diagram is preferably not less than 1.0.

The inorganic filler is preferably at least one filler selected from spherical silica, spherical alumina and calcium carbonate. In some use applications, the inorganic filler is particularly preferably spherical silica and/or spherical alumina.

The epoxy resin and/or the epoxy compound are preferably a bi- or more-functional epoxy resin and/or a bi- or more-functional epoxy compound. The epoxy resin is particularly preferably an orthocresol novolak type epoxy resin, a naphthalene skeleton-containing epoxy resin or a biphenyl skeleton-containing epoxy resin.

The curing agent is preferably a phenolic novolak resin or an aralkylphenolic resin.

The precision-molded article of the invention is usually produced by transfer molding or injection molding.

The precision-molded article of the invention is, for example, a single-core ferrule, a multi-core ferrule or an electronic circuit component.

### BRIEF DESCRIPTION OF THE DRAWINGS

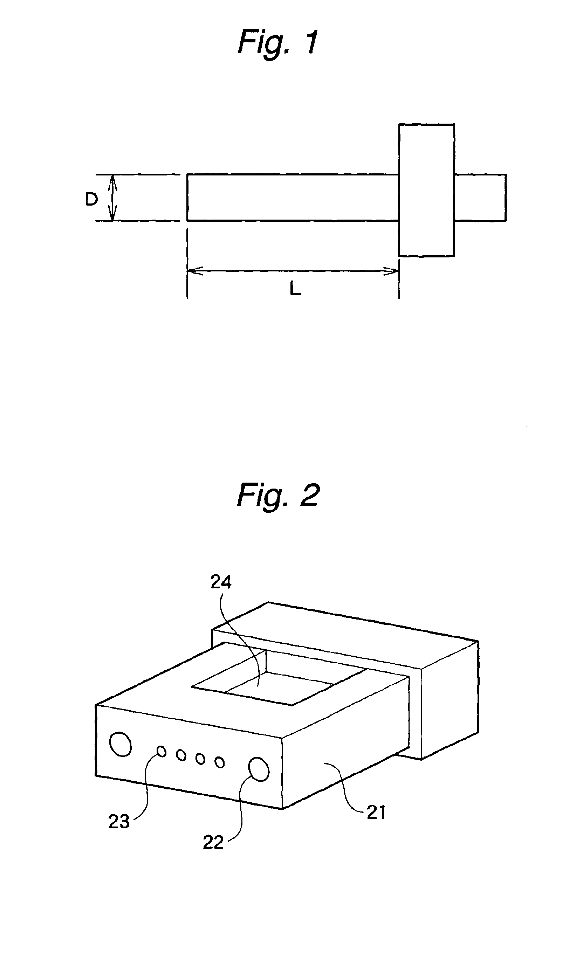

Fig. 1 is a schematic diagram of a single-core ferrule that is an example of a precision-molded article produced from the epoxy resin composition of the invention. Referring to Fig. 1, symbols D and L designate an outer diameter and a length of a ferrule, respectively. For example, the outer diameter D is 2.499 mm, and the length L is 8 mm. The circularity is measured in the center of L of the circumferential side of the ferrule.
Fig. 2 is a schematic diagram of a multi-core ferrule that is an example of a precision-molded article produced from the epoxy resin composition of the invention. Referring to Fig. 2, numeral 21 designates a multi-core connector ferrule, numeral 22 designates a connecting pin insertion hole, numeral 23 designates an optical fiber insertion hole, and numeral 24 designates an optical fiber insertion opening.

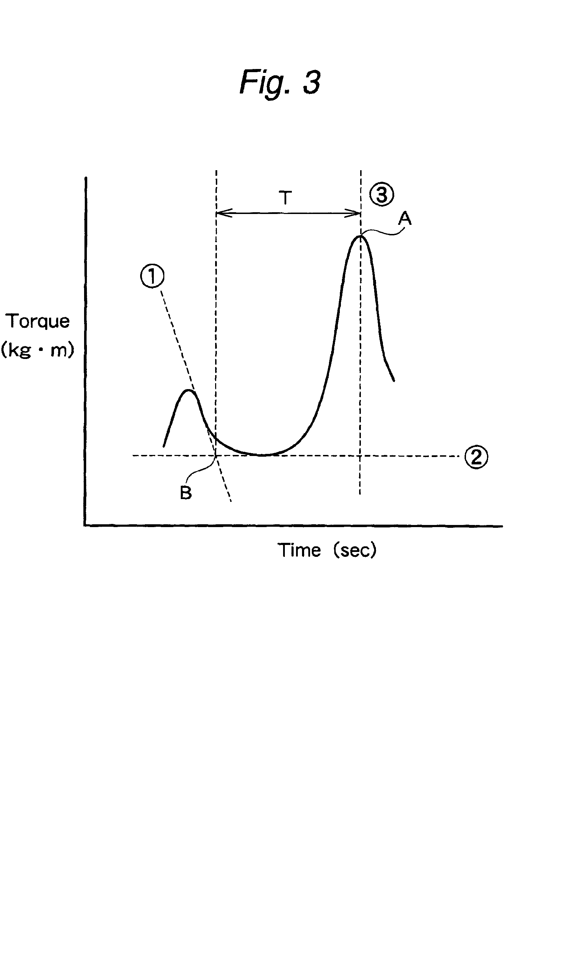

Fig. 3 is a view to explain a method to measure a gel time (T) in the working examples. Referring to Fig. 3, numeral ① designates a tangent line at the point, at which the slope of a torque profile is largest between the beginning of lowering of the torque and the minimum, numeral ② designates a line indicating the minimum torque value, numeral ③ designates a perpendicular from the point A, and symbol A designates a maximum torque point.

### PREFERRED EMBODIMENTS OF THE INVENTION

The epoxy resin composition according to the invention and uses thereof are described in detail hereinafter.

The epoxy resin composition according to the invention is a resin composition containing as main components an epoxy resin and/or an epoxy compound, a curing agent, a curing accelerator and a specific inorganic filler. The epoxy resin composition may further contain a release agent and other additives within limits not detrimental to the objects of the present invention.

The precision-molded article according to the invention is aprecision-molded article obtained by molding the resin composition.

### [Epoxy resin composition]

The components to constitute the epoxy resin composition of the invention are described below.

### <Epoxy resin and epoxy compound>

Although there is no specific limitation on the epoxy resin or the epoxy compound for use in the invention, preferable are bi- or more-functional epoxy resins or compounds, such as an orthocresol novolak epoxy resin, a naphthalene skeleton-containing epoxy resin or compound, and a biphenyl skeleton-containing epoxy resin or compound. Of these, particularly preferable is an orthocresol novolak epoxy resin, a naphthalene skeleton-containing epoxy resin or a biphenyl skeleton-containing epoxy resin. As such epoxy resins or epoxy compounds, those hitherto known are employable. These epoxy resins or epoxy compounds can be used singly or in combination of two or more kinds.

The epoxy equivalent of the epoxy resin or the epoxy compound is preferably not more than 300 g/eq. Especially when the epoxy resin composition is used for transfer molding, the epoxy equivalent of the epoxy resin or the epoxy compound is preferably in the range of 100 to 300 g/eq.

The epoxy resin and/or the epoxy compound are desirably contained in the epoxy resin composition in an amount of usually 5 to 30 % by weight, preferably 5 to 20 % by weight.

### <Curing agent>

There is no specific limitation on the curing agent for use in the invention, as far as the curing agent undergoes curing reaction with the epoxy resin and/or the epoxy compound. Above all, a phenolic resin is preferable, and a phenolic novolak resin or an aralkylphenolic resin is particularly preferable.

The curing agent is used in an amount of 20 to 100 parts by weight, preferably 35 to 95 parts by weight, based on 100 parts by weight of the epoxy resin and/or the epoxy compound. If the amount of the curing agent is expressed by a chemical equivalent ratio, the chemical equivalent ratio of the curing agent to the epoxy resin and/or the epoxy compound is desirably in the range of 0.5 to 1.5, preferably 0.7 to 1.3, from the viewpoints of moisture resistance and mechanical strength.

When the epoxy resin composition of the invention is used for injection molding, the curing agent is used in an amount of 20 to 95 parts by weight, preferably 35 to 95 parts by weight, based on 100 parts by weight of the epoxy resin and/or the epoxy compound. If the amount of the curing agent is expressed by a chemical equivalent ratio, the chemical equivalent ratio of the curing agent to the epoxy resin and/or the epoxy compound is desirably in the range of 0.5 to 1.5, preferably 0.7 to 1.3, from the viewpoints of moisture resistance and mechanical strength.

### <Curing accelerator>

When the epoxy resin composition of the invention is used for transfer molding, the curing accelerator for use in the invention has only to be one which accelerates crosslinking reaction of the epoxy resin and/or the epoxy compound with the curing agent.

Examples of such curing accelerators include:
derivatives of 1,8-diazabicyclo(5.4.0)undecene-7 (referred to as "DBU" hereinafter), such as phenolic salts of DBU, phenolic novolak salts of DBU and carbonates of DBU;
imidazoles, such as 2-methylimidazole, 2-ethyl-4-methylimidazole and 2-heptadecylimidazole; and
organic phosphines, such as triphenylphosphine and tri(p-methylphenyl)phosphine.

'The curing accelerator is used in an amount of 0.5 to 10 parts by weight based on 100 parts by weight of the epoxy resin and/or the epoxy compound.

When the epoxy resin composition of the invention is used for injection molding, the curing accelerator employable in the invention is one which accelerates crosslinking reaction of the epoxy resin and/or the epoxy compound with the curing agent and has potential to impart heat stability to the epoxy resin composition in order to enable to injection mold. That is to say, a curing accelerator which maintains the stability of the resin composition at temperatures lower than the molding temperature and rapidly promotes the reaction at the molding temperature is employed.

Examples of such curing accelerators include derivatives of 1,8-diazabicyclo(5.4.0)undecene-7 (referred to as "DBU" hereinafter), such as phenolic salts of DBU, phenolic novolak salts of DBU and carbonates of DBU; dicyandiamide; and a urea derivative represented by the following formula. Of these, the urea derivative represented by the following formula is preferably used in order to obtain the epoxy resin composition of the invention capable of producing injection molded articles of excellent properties.

Ar-NH-CO-NR₂

wherein Ar is a substituted or unsubstituted aryl group, and R which may be the same or different are each an alkyl group.

By the use of the urea derivative as the curing accelerator, specifically an alkylurea derivative represented by any one of the following formulas (a) to (f), heat stability of the resin composition at temperatures in the vicinity of 100°C is remarkably improved, and as a result, heat stability in the cylinder of the injection molding machine is improved.

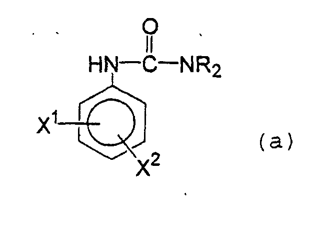

In the formula (a), X¹ and X² are each a hydrogen atom, a halogen atom, an alkyl group, an alkoxyl group or a nitro group and may be the same or different, and R which may be the same or different are each an alkyl group.

Preferred examples of the alkyl groups indicated by X¹ or X² in the formula (a) include lower alkyl groups having 1 to 5 carbon atoms, such as methyl, ethyl, propyl, isopropyl, n-butyl, t-butyl, isobutyl, n-pentyl and isopentyl.

Preferred examples of the alkoxyl groups indicated by X¹ or X² in the formula (a) include lower alkoxyl groups having 1 to 5 carbon atoms, such as methoxy, ethoxy, propoxy and butoxy.

Examples of the halogen atoms indicated by X¹ or X² in the formula (a) include atoms of chlorine, bromine, fluorine and iodine.

Preferred examples of the alkyl groups indicated by R in the formula (a) include alkyl groups having 1 to 10 carbon atoms, such as methyl, ethyl, propyl, isopropyl, n-butyl, isobutyl, sec-butyl, t-butyl, n-pentyl, isopentyl, t-pentyl, neopentyl, hexyl, isohexyl, heptyl, octyl, nonyl and decyl. Of these, particularly preferable are alkyl groups having 1 to 5 carbon atoms.

Examples of the compounds represented by the formula (a) include 3-phenyl-1,1-dimethylurea, 3-(p-chlorophenyl)-1,1-dimethylurea, 3-(3,4-dichlorophenyl)-1,1-dimethylurea, 3-(o-methylphenyl)-1,1-dimethylurea, 3-(p-methylphenyl)-1,1-dimethylurea, 3-(methoxyphenyl)-1,1-dimethylurea and 3-(nitrophenyl)-1,1-dimethylurea.

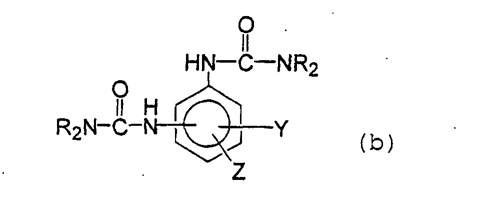

In the formula (b), Y and Z are each a hydrogen atom, a halogen atom or an alkyl group and may be the same or different, and R which may be the same or different are each a lower alkyl group.

When Y and Z in the formula (b) are each an alkyl group, they are each preferably a lower alkyl group having 1 to 5 carbon atoms. Examples of the lower alkyl groups are as described above. Likewise, examples of the halogen atoms indicated by Y or Z are as described above.

Examples of the compounds represented by the formula (b) include 1,1'-phenylenebis(3,3-dimethylurea) and 1,1'-(4-methyl-m-phenylene)-bis(3,3-dimethylurea).

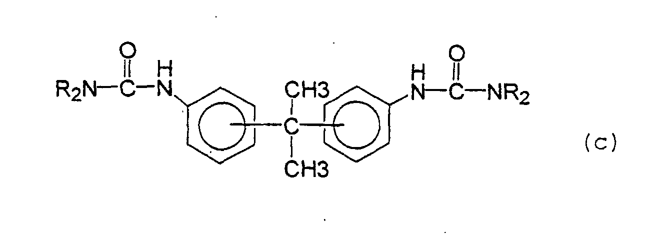

In the formula (c), R which may be the same or different are each a lower alkyl group.

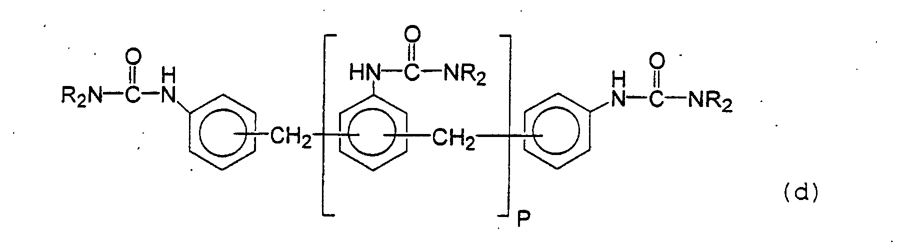

In the formula (d), p is an integer of 0 to 5, and R which may be the same or different are each a lower alkyl group.

R in the formulas (c) and (d) is preferably an alkyl group having 1 to 10 carbon atoms, more preferably a lower alkyl group having 1 to 5 carbon atoms. Examples of the alkyl groups are as described above.

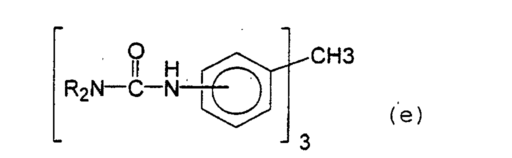

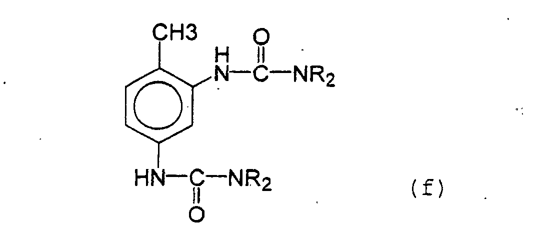

In the formulas (e) and (f), R which may be the same or different are each an alkyl group.

R in the formulas (e) and (f) is preferably an alkyl group having 1 to 10 carbon atoms, more preferably a lower alkyl group having 1 to 5 carbon atoms. Examples of the alkyl groups are as described above.

Preferred examples of the alkyl groups and the alkoxyl groups indicated by X¹, X² or R in the formulas (a) to (f) include methyl, ethyl, propyl and butyl, and alkoxyl groups corresponding thereto.

As the compound represented by the formula (f), a dimethylamine addition product of 2,4-tolylene diisocyanate (compound wherein R in the formula (f) is methyl) is preferable.

By the use of a dimethylamine addition product as the curing accelerator, heat stability of the resin composition at temperatures in the vicinity of 100°C is remarkably improved, and the composition exhibits curing characteristics suitable for the injection molding of the invention. Therefore, a dimethylamine addition product is preferably employed.

The curing accelerator is used in an amount of 3 to 20 parts by weight, preferably 3 to 10 parts by weight, based on 100 parts by weight of the epoxy resin and/or the epoxy compound.

From the viewpoints of the molding cycle speed-up and decrease of the amount of flash occurring in the molding process, it is preferable to use imidazoles, such as 2-methylimidazole, 2-ethyl-4-methylimidazole and 2-heptadecylimidazole, and organic phosphines, such as triphenylphosphine and tri(p-methylphenyl)phosphine, in combination provided that they do not impair the potential.

### <Inorganic filler>

Examples of the inorganic fillers for use in the invention include ferrite, graphite, calcium carbonate, alumina, silica, aluminum hydroxide and carbon.

The inorganic filler for use in the invention is preferably silica, alumina or calcium carbonate, more preferably spherical silica, spherical alumina or calcium carbonate. In some use, the inorganic filler is preferably spherical silica or spherical alumina, more preferably a spherical silica powder. From the viewpoints of, for example, mold-transferring properties and environmental resistance, spherical silica and/or spherical alumina are preferable. For the purpose of enhancement of platability in the electronic circuit applications, calcium carbonate is more preferably added.

The inorganic fillers mentioned above can be used singly or in combination of two or more kinds. For example, a mixture of spherical silica and spherical alumina can be used.

The inorganic filler for use in the invention has a particle size of a maximum particle diameter of not more than 10 µm and a mean particle diameter of not more than 3 µm, preferably not more than 2 µm, and a slope n of not more than 4.0, usually 0.6 to 4.0, preferably 1.0 to 4.0, more preferably 1.0 to 3.0, particularly preferably 1.5 to 3.0, in its particle size distribution that is expressed by a Rosin-Rammler's (RRS) diagram (the particle diameter and the particle size distribution are measured by a Coulter counter (manufactured by Beckman Coulter Inc., LS-230), and is contained in the epoxy resin composition in an amount of not less than 30 % by weight and not more than 85 % by weight. When the inorganic filler, particularly a spherical silica powder, having the above-mentioned particle size (maximum particle diameter and mean particle diameter) and the above-mentioned slope n in the particle size distribution that is expressed by a Rosin-Rammler's (RRS) diagram is used in the above amount, an epoxy resin composition having excellent flowability, moldability and mold-transferring properties can be obtained. By the use of this composition, precision connectors for optical communication such as single-core ferrules and multi-core ferrules can be produced as resin-made ones. Further, since this composition is excellent in injection moldability and mold-transferring properties, it can be used for electronic circuit components and electronic circuit boards which will have more and more fine patterns in the future, and a circuit pattern formed on a stamper can be transferred with precision. Moreover, by the use of the epoxy resin composition, circuit formation by plating is feasible, and molded articles produced from the composition have a small degree of surface roughness. Therefore, the composition can be preferably used for the production of fine electronic circuit components and fine electronic circuit boards having line and space of not more than 10 µm.

The Rosin-Rammler's (RRS) diagram referred to herein indicates a width of a particle size distribution obtained from integrated residual weights of the inorganic filler, and the slope n in the obtained particle size distribution indicates uniformity of the particle sizes. The Rosin-Rammler's diagram can be well applied to an unsifted pulverized product, and linearity can be relatively easily ensured, so that manufacturers of silica and the like usually use this way of expression for the particle size distribution.

When the epoxy resin composition of the invention is used for injection molding, the inorganic filler is particularly preferably a spherical silica powder and desirably has a particle size of a maximum particle diameter of not more than 10 µm and a mean particle diameter of not more than 3 µm, preferably not more than 2 µm, and a slope n of preferably 1.0 to 4.0, more preferably 1.0 to 3.0, particularly preferably 1.5 to 3.0, in the particle size distribution that is expressed by a Rosin-Rammler's (RRS) diagram.

When the epoxy resin composition of the invention is used for injection molding, the inorganic filler is used in an amount of preferably 30 to 80 % by weight, particularly preferably 60 to 80 % by weight, based on 100 % by weight of the epoxy resin composition.

When the epoxy resin composition of the invention is used for transfer molding, the inorganic filler is particularly preferably a spherical silica powder and has preferably a particle size of a maximum particle diameter of not more than 10 µm and a mean particle diameter of not more than 3 µm, more preferably a particle size of a maximum particle diameter of 3 to 7 µm and a mean particle diameter of 0.5 to 2 µm, and a slope n of preferably 1.0 to 4.0, more preferably 1.0 to 3.0, in the particle size distribution that is expressed by a Rosin-Rammler's (RRS) diagram.

When the epoxy resin composition of the invention is used for transfer molding, the inorganic filler is used in an amount of preferably 40 to 85 % by weight, particularly preferably 60 to 80 % by weight, based on 100 % by weight of the epoxy resin composition.

In the present invention, the slope n in the particle size distribution that is expressed by a Rosin-Rammler's (RRS) diagram was determined by the following formula.
n = [log(2-logR2)-log(2-logR1)]/(logDp2-logDp1)
Dp1: particle diameter of the point 1 (0.2 µm or 2 µm)
Dp2: particle diameter of the point 2 (1 µm or 10 µm)
R1: cumulative weight% from the maximum particle diameter to the point 1
R2: cumulative weight% from the maximum particle diameter to the point 2

In the present invention, in consideration of the proportion of the filler in the distribution, with respect to the inorganic filler having a mean particle diameter of not more than 10 µm, the slope n was determined using the point of a particle diameter of 0.2 µm and the point of a particle diameter of 1.0 µm and with respect to the inorganic filler having a mean particle diameter of not less than 10 µm, the slope n was determined using the point of a particle diameter of 2 µm and the point of a particle diameter of 10 µm.

### <Release agent>

Examples of the release agents which may be used in the invention when necessary include:
higher fatty acids, such as montanic acid, stearic acid, behenic acid and oleic acid;
esters of higher fatty acids, such as carnauba wax;
metallic salts of higher fatter acids, such as zinc behenate, zinc oleate, magnesiums stearate, barium stearate and aluminum stearate; and
metallic soaps, such as zinc stearate.

These release agents can be used singly or in combination of two or more kinds.

When the epoxy resin composition of the invention is used for injection molding, the release agent is used in an amount of 0.03 to 1.0 % by weight, preferably 0.05 to 0.8 % by weight, in the epoxy resin composition. When the added amount of the release agent is in the above range, the epoxy resin composition hardly adheres inside the cylinder of the injection molding machine. Hence, the injection molding can be stably carried out.

When the epoxy resin composition of the invention is used for transfer molding, the release agent is used in an amount of 0.2 to 1 % by weight, preferably 0.3 to 0.8 % by weight, in the epoxy resin composition. When the added amount of the release agent is in the above range, the resin composition hardly adheres to the mold in the compression process for tableting and hardly adheres to the mold also in the molding process. Hence, the transfer molding can be stably carried out.

### <Other additives>

To the epoxy resin composition of the invention, silane coupling agents such as γ-glycidoxypropyltrimethoxysilane; flame retardants such as a brominated epoxy resin, antimony trioxide, aluminum hydroxide and melamine polyphosphate; colorants such as carbon black and phthalocyanine, etc. may be further added when necessary, within limits not detrimental to the objects of the invention.

When the epoxy resin composition of the invention is used for injection molding, stress reducing agents, natural or synthetic waxes, etc. can be further added.

### [Preparation of epoxy resin composition]

The epoxy resin composition according to the invention can be obtained by heat mixing the epoxy resin and/or the epoxy compound, the curing agent, the curing accelerator, the inorganic filler, and optionally, the release agent and the other additives, in the above-mentioned amounts by means of a twin-screw extruder, a heating kneader or a heated roll, followed by cooling and pulverizing.

The epoxy resin composition of the invention can be preferably used for injection molding or transfer molding.

### [Precision-molded article]

The precision-molded article according to the invention can be produced by molding the above-mentioned epoxy resin composition of the invention through transfer molding, injection molding or the like.

By the injection molding of the epoxy resin composition of the invention; a precision-molded article such as an electronic circuit component can be obtained.

By the transfer molding of the epoxy resin composition of the invention, a precision-molded article, such as a high-precision single-core ferrule shown in Fig. 1 or a high-precision multi-core ferrule shown in Fig. 2, can be obtained.

### EXAMPLES

The present invention is further described with reference to the following examples, but it should be construed that the invention is in no way limited to those examples.

### [Examples 1-4, and Comparative Examples 1 and 2]

The epoxy resin compositions of Examples 1 to 4 and Comparative Examples 1 and 2 were each obtained in the following manner. All the materials shown in Table 1 were mixed by a Henschel mixer, and the mixture was heat kneaded by a roll at a temperature of 90°C, followed by cooling and pulverizing.

Subsequently, the epoxy resin compositions were each transfer molded, followed by post-cure at 180°C for 90 minutes to obtain resin-made single-core ferrules (shown in Table 1; D: 2.499 mm and L: 8 mm).

The conditions of the above transfer molding are as follows.
Mold temperature: 185°C
Pouring molding pressure: 450 Kg/cm² (4.4×10⁷ Pa)
Preset pouring time: 30 seconds
Preset curing time: 90 seconds

The single-core resin ferrules obtained as above were evaluated in accordance with the following methods. The results are shown in Table 1.

### <Evaluation method>

### (1) Degree of surface roughness

A maximum degree of surface roughness Rt was measured, and the degree of surface roughness was evaluated based on the Rt. The measuring conditions are as follows.
Driving rate: 0.3 mm/s
Cut-off: 0.8 mm
Measuring machine: SURFCOM 570A (trade name) manufactured by Tokyo Seimitsu Co., Ltd.
Molded article size: 30mm×6mm, thickness: 2 mm

In this measurement, 5 mm of the central part of the molded article in the longer direction was taken as a reference length.

### (2) Circularity

The circularity of the single-core ferrule was determined by measuring a circularity in the center of the 'circumferential side of the ferrule.

Measuring machine: RONDCOM 52B (trade name) manufactured by Tokyo Seimitsu Co., Ltd.

**Table 1**

| | Example | | | | Comparative Example | |
|---|---|---|---|---|---|---|
| | 1 | 2 | 3 | 4 | 1 | 2 |
| Composition (part(s) by weight) | | | | | | |
| Epoxy resin | | | | | | |
| Biphenyl type epoxy resin | 100 | 100 | 100 | 100 | 100 | 100 |
| Curing agent | 90 | 90 | 90 | 90 | 90 | 90 |
| Curing accelerator | 3 | 3 | 3 | 3 | 3 | 3 |
| Inorganic filler | | | | | | |
| Spherical silica (a) | 550 | | | 300 | | |
| Spherical silica (b) | | 550 | | | | |
| Spherical silica (c) | | | 550 | | | |
| Spherical silica (d) | | | | | 550 | |
| Spherical silica (e) | | | | | | 550 |
| Spherical alumina | | | | 250 | | |
| Brominated epoxy resin | 15 | 15 | 15 | 15 | 15 | 15 |
| Antimony trioxide | 5 | 5 | 5 | 5 | 5 | 5 |
| Carbon black | 2 | 2 | 2 | 2 | 2 | 2 |
| γ-glycidoxypropyl-trimethoxysilane | 5 | 5 | 5 | 5 | 5 | 5 |
| Carnauba wax | 3 | 3 | 3 | 3 | 3 | 3 |
| Degree of surface roughness Rt (µm) | 0.3 | 0.5 | 0.5 | 0.3 | 1.8 | 2.1 |
| Circularity (µm) | 0.6 | 0.7 | 0.7 | 0.6 | 1.5 | 1.7 |

### <Components shown in Table 1>

Epoxy resin: biphenyl type epoxy resin (available from Yuka Shell Epoxy Co., Ltd. (presently, Japan Epoxy Resin Co., Ltd.), trade name: Epikote YX4000HK)

Curing agent: aralkylphenolic resin (available from Mitsui Chemicals, Inc., trade name: MILEX XLC-LL)

Curing accelerator: DBU phenolic novolak salt (available from SAN-APRO Ltd., trade name: U-CAT SA841)

Spherical silica (a): maximum particle diameter = 3 µm, mean particle diameter = 0.5 µm, RRS distribution slope n = 2.7

Spherical silica (b): maximum particle diameter = 7 µm, mean particle diameter = 1.0 µm, RRS distribution slope n = 2.3

Spherical silica (c): maximum particle diameter = 8 µm, mean particle diameter = 1.5 µm, RRS distribution slope n = 2.0

Spherical silica (d): maximum particle diameter = 24 µm, mean particle diameter = 3.5 µm, RRS distribution slope- n = 1.3

Spherical silica (e): maximum particle diameter = 64 µm, mean particle diameter = 6.5 µm, RRS distribution slope n = 1.0

Spherical alumina: maximum particle diameter = 3 µm, mean particle diameter = 0.7 µm, RRS distribution slope n = 2.8

Brominated epoxy resin: available from Nippon Kayaku Co. Ltd., trade name: BREN-S, epoxy equivalent = 285 g/eq

Antimony trioxide: available from Nippon Seiko Co. Ltd., trade name: PATOX-M

γ-glycidoxypropyltrimethoxysilane: available from Shin-etsu Chemical Co. Ltd., trade name: KBM-403

Carnauba wax: available from S. Kato & Co., trade name: Carnauba Wax Type 1

Carbon Black: available from Mitsubishi Chemical Co., trade name: Mitsubishi Carbon Black #45

From the results shown in Table 1, it can be seen that with respect to the epoxy resin compositions (Examples 1 to 4) using spherical silica having a maximum particle diameter of not more than 10 µm, a mean particle diameter of not more than 3 µm and a slope n of not more than 4.0 in the particle size distribution that is expressed by the RRS diagram, the mold-transferring properties were particularly excellent, and the degree of surface roughness Rt and the circularity could be reduced to not more than 1 µm and not more than 1 µm, respectively. As a result, it was understood that the precision required for single-core ferrules could be satisfied.

### [Example 5]

All the materials shown in Table 2 were mixed by a Henschel mixer, and the mixture was heat kneaded by a roll at a temperature of 90 to 110°C, followed by cooling and pulverizing to obtain an epoxy resin composition.

With respect to the obtained resin composition, the spiral flow, gel time and a degree of surface roughness of a molded article were measured in accordance with the following methods. Further, continuous moldability of the composition by the injection molding was evaluated in accordance with the following method. The results are shown in Table 2.

### (1) Spiral flow

Using a mold having a spiral cavity based on EMMI1-66 standard, the resin composition was transfer molded at a mold temperature of 150°C and an effective pressure of 6.9×10⁶ Pa (70 kgf/cm²) and then cured for 180 seconds, to measure a length in which the resin composition flowed in the mold.

### (2) Gel time

Using a labo plastomill manufactured by Toyo Seiki Seisakusho Co., Ltd., a gel time was measured from a chart shown in Fig. 3 in the following manner.

A tangent line ① at the point, at which the slope of a torque profile is largest between the beginning of lowering of the torque after introduction of a sample into the apparatus and the minimum, is drawn. Then, a line ② indicating the minimum torque is drawn in parallel to the time axis in the region where the minimum torque is maintained. From the maximum torque point A, a perpendicular ③ is drawn, and a length from the intersection of the line ① with the line ② to the line ③ is determined, and the length is taken as the gel time (T).

### (3) Continuous moldability by injection molding

Using a mold for a molded article having a size of 30 mm x 6 mm and a thickness of 2 mm, injection molding of the resin composition was carried out under the conditions of a mold temperature of 180°C and a molding time of 60 sec, to observe whether continuous molding for not shorter than 1 hour was feasible or not. A resin composition capable of being injection molded for not shorter than 1 hour is represented by "AA", and a resin composition incapable of being injection molded for not shorter than 1 hour is represented by "BB". Thus, continuous moldability in injection molding was evaluated.

### (4) Surface roughness of molded article

Although some parameters are proposed for surface roughness, the following parameter was adopted. That is to say, when a reference length was sampled from a roughness curve and this sampled part was sandwiched between two straight lines parallel to the centerline, and the distance between the two straight lines, i.e., a maximum degree of surface roughness Rt, was measured.

In the measurement of Rt, a surface roughness meter manufactured by Tokyo Seimitsu Co., Ltd. and a molded article having a size of 30 mm × 6 mm and a thickness of 2 mm were used, and 5 mm of the central part of the molded article in the longer direction was taken as a reference length. The measurement was carried out under the conditions of a driving rate of 0.3 mm/s and a cut-off of 0.8 mm.

### [Example 6]

The procedure of Example 5 was repeated, except that spherical silica (b) having a maximum particle diameter of 7 µm, a mean particle diameter of 1.0 µm and a RRS distribution slope n of 2.3 was used instead of the spherical silica (a) having a maximum particle diameter of 3 µm, a mean particle diameter of 0.5 µm and a RRS distribution slope n of 2.7. The results are shown in Table 2.

### [Example 7]

The procedure of Example 5 was repeated, except that spherical silica (c) having a maximum particle diameter of 8 µm, a mean particle diameter of 1.5 µm and a RRS distribution slope n of 2.0 was used instead of the spherical silica (a). The results are shown in Table 2.

### [Comparative Example 3]

The procedure of Example 5 was repeated, except that spherical silica (f) having a maximum particle diameter of 24 µm, a mean particle diameter of 3.0 µm and a RRS distribution slope n of 1.3 was used instead of the spherical silica (a). The results are shown in Table 2.

### [Comparative Example 4]

The procedure of Example 5 was repeated, except that spherical silica (e) having a maximum particle diameter of 64 µm, a mean particle diameter of 6.5 µm and a RRS distribution slope n of 1.0 was used instead of the spherical silica (a). The results are shown in Table 2.

**Table 2**

| | Example | | | Comparative Example | |
|---|---|---|---|---|---|
| | 5 | 6 | 7 | 3 | 4 |
| Composition (part(s) by weight) | | | | | |
| Epoxy resin | | | | | |
| Orthocresol novolak epoxy resin | 100 | 100 | 100 | 100 | 100 |
| Curing agent | 51 | 51 | 51 | 51 | 51 |
| Curing accelerator | 5 | 5 | 5 | 5 | 5 |
| Inorganic filler Spherical silica (a) | 454 | | | | |
| Spherical silica (b) | | 454 | | | |
| Spherical silica (c) | | | 454 | | |
| Spherical silica (f) | | | | 454 | |
| Spherical silica (e) | | | | | 454 |
| Calcium carbonate | 31 | 31 | 31 | 31 | 31 |
| Brominated epoxy resin | 27 | 27 | 27 | 27 | 27 |
| Antimony trioxide | 5 | 5 | 5 | 5 | 5 |
| Carbon black | 1.5 | 1.5 | 1.5 | 1.5 | 1.5 |
| γ-glycidoxypropyl-trimethoxysilane | 6 | 6 | 6 | 6 | 6 |
| Carnauba wax | 5 | 5 | 5 | 5 | 5 |
| Spiral flow (cm) | 40 | 48 | 60 | 75 | 79 |
| Gel time (sec) | 44 | 45 | 45 | 47 | 48 |
| Continuous moldability | AA | AA | AA | AA | AA |
| Degree of surface roughness of molded article Rt (µm) | 0.3 | 0.5 | 0.5 | 1.8 | 2.1 |

### <Components shown in Table 2>

Epoxy resin: orthocresol novolak epoxy resin (available from Nippon Kayaku Co. Ltd., trade name: EOCN-103S, epoxy equivalent = 214 g/eq)
Curing agent: phenolic novolak resin (available from Nippon Kayaku Co. Ltd., trade name: PN-100)
Curing accelerator: dimethylamine addition product of 2,4-tolylene diisocyanate (available from SAN-APRO Ltd., trade name: U-CAT3502T)
Calcium carbonate: available from Bihoku Funka Kogyo K.K., trade name: µ-POWDER 3N

Other components are the same as those shown in Table 1.

From the results shown in Table 2, it can be seen that with respect to the epoxy resin compositions (Examples 5 to 7) using spherical silica having a maximum particle diameter of not more than 10 µm, a mean particle diameter of not more than 3 µm and a slope n of not more than 4.0 in the particle size distribution that is expressed by a RRS diagram, continuous injection molding was feasible without greatly impairing flowability expressed by a spiral flow. It can be also seen that with respect to the molded articles produced from these compositions, the degree of surface roughness Rt could be reduced to not more than 1 µm, and the degree of surface roughness was better than that of the molded articles produced from the compositions (Comparative Examples 3 and 4) using conventional spherical silica having a mean particle diameter of not less than 5 µm. As a result, it was understood that a fine pattern formed on a stamper or the like could be transferred with precision.

### EFFECT OF THE INVENTION

According to the invention, it is possible to provide an epoxy resin composition which is free from deterioration of moldability caused by lowering of flowability, is excellent in mold-transferring properties and is capable of producing a precision-molded article having excellent dimensional stability, such as a precision-molded component having a small degree of surface roughness and small circularity. By the use of this resin composition, a precision connector for optical communication such as a single-core ferrule or a multi-core ferrule can be produced as resin-made one. A single-core ferrule produced by the use of this resin composition has small circularity, is obtainable as a resin-made ferrule and is available at a lower cost compared with a conventional ceramic-made single-core ferrule. A multi-core ferrule produced by the use of this resin composition has excellent dimensional stability, is obtainable as a resin-made ferrule and is available at a lower cost as compared with a conventional ceramic-made multi-core ferrule.

According to the invention, further, it is possible to provide an epoxy resin composition which is free from deterioration of moldability caused by lowering of flowability, is excellent in mold-transferring properties and is capable of being injection molded. By the use of this resin composition, a precision-molded component having a small degree of surface roughness and excellent mold-transferring properties can be obtained, and a surface profile formed on a stamper can be transferred with precision. Therefore, this resin composition is suitable for a material for components or boards comprising a fine electronic circuit by plating after molding. The resin composition is capable of providing a fine electronic circuit component or a fine electronic circuit board having line and space of not more than 10 µm because circuit formation by plating is feasible and a molded article having a small degree of surface roughness can be produced.

The epoxy resin composition of the invention can be molded by not only transfer molding but also continuous injection molding, and hence the range of the molding conditions can be widened.

The precision-molded article according to the invention comprises the above-mentioned resin composition, and hence the molded article is excellent in the dimensional stability as well as in the mold-transferring properties. The precision-molded article of the invention is, for example, a precision-molded component, such as a single-core ferrule having a small degree of surface roughness and small circularity or a multi-core ferrule having a small degree of surface roughness and excellent dimensional stability, or an electronic circuit component.

## Claims

1. An epoxy resin composition containing as main components an epoxy resin and/or an epoxy compound, a curing agent, a curing accelerator and an inorganic filler, wherein:
the inorganic filler has a particle size of a maximum particle diameter of not more than 10 µm and a mean particle diameter of not more than 3 µm and a slope n of not more than 4.0 in its particle size distribution that is expressed by a Rosin-Rammler's (RRS) diagram, and is contained in an amount of not less than 30 % by weight and not more than 85 % by weight based on the total amount of the resin composition.

2. The epoxy resin composition as claimed in claim 1, wherein the slope n in the particle size distribution of the inorganic filler, expressed by a RRS diagram, is not less than 1.0.

3. The epoxy resin composition as claimed in claim 1 or 2, wherein the inorganic filler is at least one filler selected from spherical silica, spherical alumina and calcium carbonate.

4. The epoxy resin composition as claimed in claim 1 or 2, wherein the inorganic filler is spherical silica and/or spherical alumina.

5. The epoxy resin composition as claimed in any one of claims 1 to 4, wherein the epoxy resin and/or the epoxy compound is a bi- or more-functional epoxy resin and/or a bi- or more-functional epoxy compound.

6. The epoxy resin composition as claimed in claim 5, wherein the epoxy resin is an orthocresol novolak epoxy resin, a naphthalene skeleton-containing epoxy resin or a biphenyl skeleton-containing epoxy resin.

7. The epoxy resin composition as claimed in any one of claims 1 to 6, wherein the curing agent is a phenolic novolak resin or an aralkylphenolic resin.

8. The epoxy resin composition as claimed in any one of claims 1 to 7, which is an epoxy resin composition for transfer molding.

9. The epoxy resin composition as claimed in any one of claims 1 to 7, which is an epoxy resin composition for injection molding.

10. The epoxy resin composition as claimed in claim 9, wherein the curing accelerator is a urea derivative represented by the following formula:
Ar-NH-CO-NR₂
wherein Ar is a substituted or unsubstituted aryl group, and R which may be the same or different are each an alkyl group.

11. A precision-molded article obtained from an epoxy resin composition containing as main components an epoxy resin and/or an epoxy compound, a curing agent, a curing accelerator and an inorganic filler, wherein:
the inorganic filler has a particle size of a maximum particle diameter of not more than 10 µm and a mean particle diameter of not more than 3 µm and a slope n of not more than 4.0 in its particle size distribution that is expressed by a Rosin-Rammler's (RRS) diagram, and is contained in the resin composition in an amount of not less than 30 % by weight and not more than 85 % by weight based on the total amount of the resin composition.

12. The precision-molded article as claimed in claim 11, wherein the slope n in the particle size distribution of the inorganic filler, expressed by a RRS diagram, is not less than 1.0.

13. The precision-molded article as claimed in claim 11 or 12, wherein the inorganic filler is at least one filler selected from spherical silica, spherical alumina and calcium carbonate.

14. The precision-molded article as claimed in any one of claims 11 to 13, which is produced by transfer molding or injection molding.

15. The precision-molded article as claimed in any one of claims 11 to 14, which is a single-core ferrule or a multi-core ferrule.

16. The precision-molded article as claimed in any one of claims 11 to 14, which is an electronic circuit component.
